# EUROPEAN PATENT SPECIFICATION

(11) **EP 1 870 321 B1**
(45) Date of publication and mention of the grant of the patent: **07.04.2010**
(21) Application number: 07110564.7
(22) Date of filing: 19.06.2007
(51) Int. Cl.: B62D 35/00

(54) **A system for optimizing the aerodynamics of the rear part of an industrial or commercial vehicle**
System zur Optimierung der aerodynamischen Eigenschaften des hinteren Teils eines Industrie- oder Nutzfahrzeugs
Système pour optimiser les aérodynamiques de partie arrière d'un véhicule industriel ou commercial

(30) Priority: 20.06.2006 IT MI20061178
(43) Date of publication of application: 26.12.2007
(73) Proprietor: IVECO S.p.A., 10156 Torino (IT)
(72) Inventor: Guariento, Dario, 10022 Carmagnola (IT); Posenato, Giovanni, 10071 Borgaro Torinese (IT); Lupo, Filippo Maria, 80038 Pomigliano D'Arco (IT); Consano, Ludovico, 10023 Chieri (IT)
(74) Representative: Borsano, Corrado

(56) References cited:
- EP-A- 1 035 006
- DE-U1- 29 623 407
- US-A- 4 036 519
- US-A- 4 601 508
- US-A- 5 240 306

## Description

The present invention relates to a system for optimizing the aerodynamics of the rear part of an industrial or commercial vehicle.

The energy efficiency of motor vehicles is known to be directly related to the aerodynamic drag and turbulence caused by the motion of the vehicle.

Efficient fuel consumption has become a paramount concern in view of increasing fuel costs and overall fuel usage, also due to problems associated with pollution.

These requirements are even more important in the case of large vehicles, such as industrial and commercial vehicles. The aerodynamic performance of the majority of these vehicles is reduced due to their overall shape, for instance the flat-faced frontal area of the cab, or the parts of the trailer, or semi-trailer, in case of articulated vehicles, which are square.

As the vehicle moves, a significant amount of air turbulence is produced, especially to the rear of the vehicle, which results in increased aerodynamic drag and leads to higher fuel consumption. This phenomenon increases in proportion to the speed of the vehicle, reaching particularly high levels on roads where vehicles can travel at high speeds, such as motorways.

The reduced aerodynamic efficiency of these vehicles is mainly due to the square shape of the back of the trailer or semi-trailer, which facilitates the formation of turbulence and depression on the back of the vehicle and tends to slow the vehicle down. One problem is the lack of complete freedom in designing rear fairings, since it must be possible to open the rear doors.

Solutions aimed at solving this problem are known in the prior art, which consist of mounting aerodynamic devices on the rear of the trailer.

These known systems, which can be attached to all or part of the rear surface, may for instance be inflated by means of air from the outside that is introduced due to the motion of the vehicle.

US Patent 4.601.508 discloses for example a system for optimizing the aerodynamics of the rear part of an industrial vehicle, according to the preamble of claim 1, which comprises inflatable and retractable spoilers on entire surface of the rear profile of the body of the vehicle or the trailer or semitrailer.

However, with these solutions there are problems with deflation and bulkiness.

Other known systems consist of attaching rigid retractable or folding devices, which do not however optimize aerodynamic performance and the relative operating systems are difficult to produce.

Therefore the purpose of the present invention is to describe a system for optimizing the aerodynamics of the rear part of an industrial or commercial vehicle, that overcomes the drawbacks described above.

The present invention relates to a system for optimizing the aerodynamics of the rear part of an industrial or commercial vehicle, comprises inflatable and retractable spoilers on the entire surface of the rear profile of the body of the vehicle or of the trailer or semi-trailer; said spoilers comprising top spoilers, side spoilers, bottom spoilers, that are split along the lines dividing the wings of the rear doors giving access to the inside of the body of the vehicle or of the trailer or semi-trailer, so as to allow the doors to be opened separately; the system being **characterized in that** said inflatable spoilers further comprise a rigid internal support, attached to said wings, an inflatable and retractable part, fixed to said internal support, said internal support essentially being suitable to contain said inflatable and retractable part when retracted.

In particular the present invention relates to a system for optimizing the aerodynamics of the rear part of an industrial or commercial vehicle, as described more fully in the dependent claims, which are an integral part of this description.

Further purposes and advantages of this invention will become clear from the following detailed description of a preferred embodiment (and the relative alternative embodiments), and from the drawings that are attached hereto, which are merely illustrative and not limitative, in which:

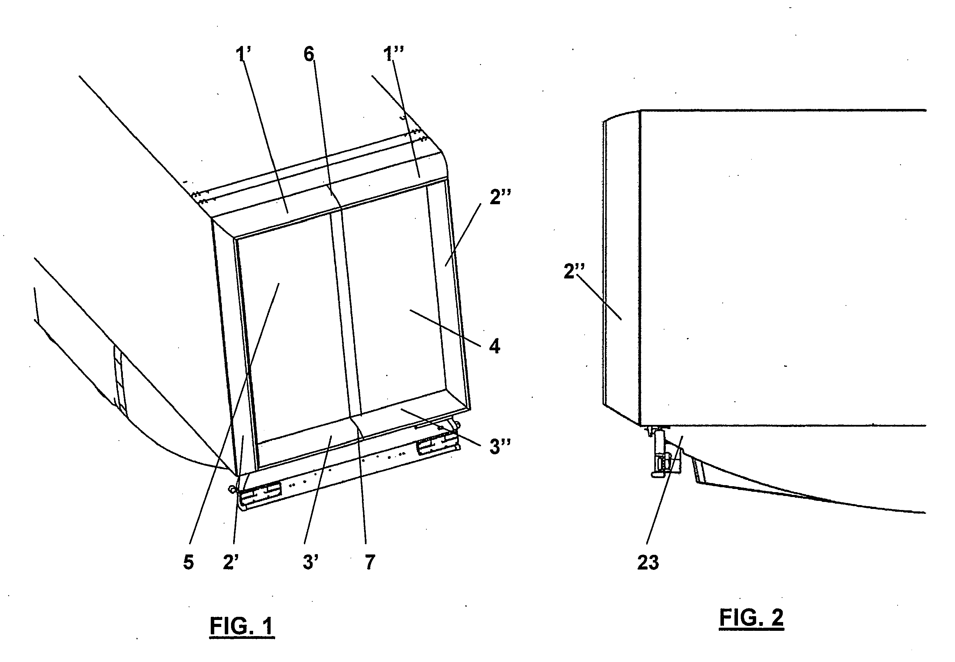

figures 1 and 2 are cutaway views, respectively perspective and side cutaway views, of a vehicle trailer comprising the system for optimizing the aerodynamics according to the present invention;

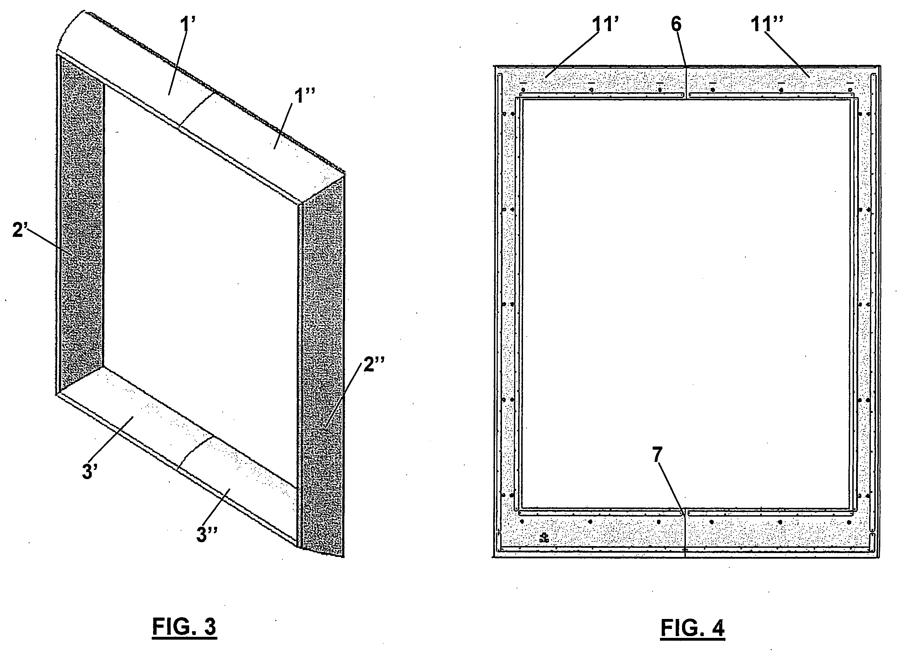

figure 3 is a perspective view of the system for optimizing the aerodynamics;
figure 4 is a front view of the support for the system for optimizing the aerodynamics;

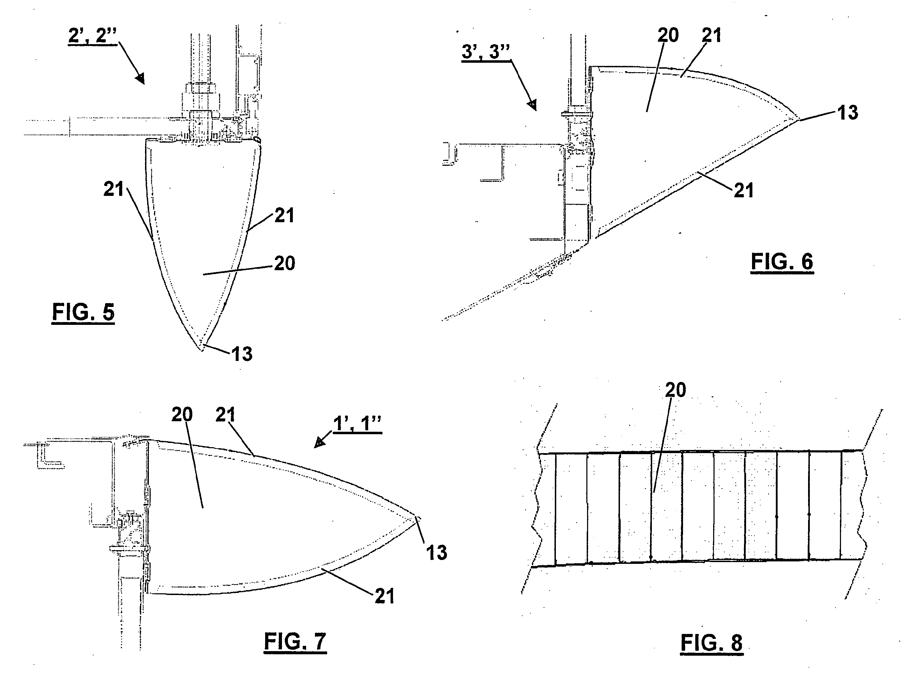

figures 5, 6 and 7 are views of cross-sections, respectively, of the inflatable side, bottom and top spoilers;
figure 8 is a longitudinal section of the inflatable spoiler;
figure 9 is a diagram that illustrates the shape of the external profile of the inflatable side and top spoilers.

In the drawings the same reference numbers are used to indicate the same parts.

According to the invention, inflatable and retractable aerodynamic devices, hereafter referred to as inflatable spoilers, are attached to the entire surface of the rear profile of the body of the vehicle or of the trailer or semi-trailer.

The function of the inflatable rear spoilers is to guide the airflows so that they meet behind the trailer or semi-trailer within the shortest possible distance, filling the partial air vacuum and reducing the aerodynamic turbulence generated to the rear of the vehicle in motion. The result is to maximize the basic pressure on the rear wall of the trailer or semi-trailer and thus minimize the relative tractive resistance, which is definitely the most significant contributor to aerodynamic drag in industrial or commercial vehicles.

The inflatable rear spoilers are split along the lines dividing the wings of the rear doors to the inside of the trailer or semi-trailer, so that the doors can be opened separately.

The system consists of inflatable top spoilers 1', 1" split along the upper dividing line 6 between the two wings 4 and 5 of the rear door; inflatable side spoilers 2', 2"; inflatable bottom spoilers 3', 3", split along the lower dividing line 7 between the two wings 4 and 5.

The inflatable spoilers comprise rigid base supports 11', 11", for example made of aluminium, which are also split along the upper and lower dividing lines 6, 7 between the two wings 4 and 5 of the rear door. These also act as containers for the inflatable spoilers when deflated and retracted. The internal supports 11', 11" are attached directly to the edges of the doors, for example by means of screws.

In general the cross-section of the inflatable spoilers corresponds to a given width of the base support 11', 11", growing thinner until tapering to a point 13 towards the outer edge facing the outside of the semi-trailer, thus assuming a triangular-type shape.

The pointed tip is obtained for instance by folding and heat-sealing the two flaps. When released they remain folded.
The pointed tip is particularly advantageous for creating a definite flow breakaway point, so that the air flows over the outside edge and away from the spoiler without creating a return effect.

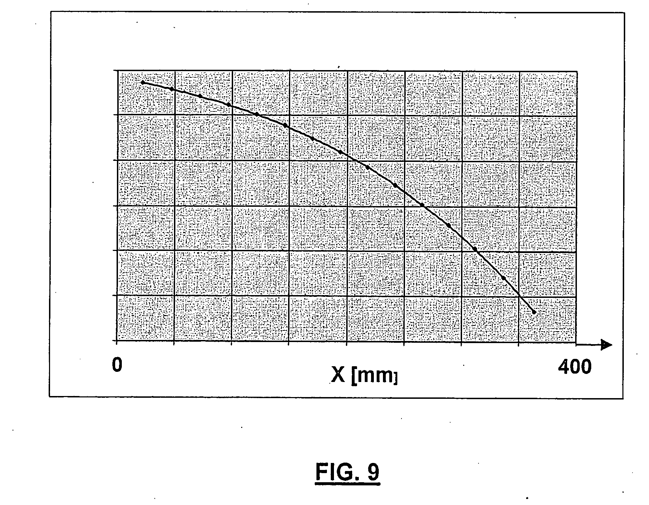

Preferably the profile of the outside edge of the inflatable side spoilers 2', 2" and top spoilers 1', 1" constitutes a third-order polynomial curve, with an initial angle of inclination towards the support of 15° (see fig. 9), so as to redirect the airflow inwards without any premature breakaway, extending lengthwise in a horizontal direction X by approximately 350 mm.

The profile of the outside edge of the inflatable bottom spoilers is rectilinear with an inclination equal to that of an air diffuser 23 arranged on the underside at the rear of the trailer, and the rear end of which is adjacent to the lower spoilers.

Thus, the airflow coming from underneath the trailer is correctly directed and pushed upwards in the rear part of the trailer, so as to create a definite flow breakaway effect.

The inflatable spoilers 10 comprise a non-rigid, inflatable and retractable part, for example made of PVC sheet, with a smooth outer surface facing the outside of the vehicle to improve the aerodynamic efficiency of the vehicle. When inflated, the required geometry of the spoiler is maintained by means of internal sector cross-pieces 20. More specifically, a series of heat-sealed flaps 21 are attached transversely to the inside edges of the non-rigid part, said flaps possibly being made of the same material as said non-rigid part. Respective series of cross-pieces 20, made of a less rigid and thinner material than the outer surfaces, are stitched transversely to these flaps 21, so as to facilitate retraction and folding when the inflatable spoilers are deflated.

The lower edge of the inflatable bottom spoilers 3', 3" can be provided with a system whereby it can be at least partially lowered to allow access to any handles on the bottom edge of the wings 4, 5 of the doors, positioned beneath said spoilers. Said system consists of a releasing and turning mechanism.

The inflatable spoilers are operated by means of an inflating and packing/retracting system that must guarantee continuous (re)inflation and (re)deflation to order.

For this purpose a series of tie elements 22 are attached to the outer and inner surfaces of the sides of the inflatable spoilers, said stays tie elements being operated in a suitable way and acting, starting from the end 13 of the spoiler, to pull it back and fold it closed, and re-open it in a perpendicular direction, forcing it into the desired geometry when inflated.

The inflating system comprises ordinary pumps that inflate and deflate the inflatable spoilers, governed by a control system that also controls the stays on the side surfaces of the inflatable spoilers.

The spoilers are inflated at a pressure sufficiently higher than the atmospheric pressure, so as to remain in the extended condition. They are deflated at a pressure lower than the atmospheric pressure and maintained in this condition, so as to remain folded on the internal supports 11, occupying as little space as possible.
It will be apparent to the person skilled in the art that other alternative and equivalent embodiments of the invention can be conceived and reduced to practice without departing from the true spirit of the invention. From the description set forth above it will be possible for the person skilled in the art to embody the invention without introducing any further construction details.

## Claims

1. System for optimizing the aerodynamics of the rear part of an industrial or commercial vehicle, comprises inflatable and retractable spoilers (1', 1 ", 2', 2", 3', 3") on the entire surface of the rear profile of the body of the vehicle or of the trailer or semi-trailer; said spoilers comprising top spoilers (1', 1"), side spoilers (2', 2"), bottom spoilers (3', 3"), that are split along the lines (6, 7) dividing the wings (4, 5) of the rear doors giving access to the inside of the body of the vehicle or of the trailer or semi-trailer, so as to allow the doors to be opened separately; the system being **characterized in that** said inflatable spoilers (10) further comprise a rigid internal support (11', 11 "), attached to said wings (4, 5), an inflatable and retractable part (13, 20, 21), fixed to said internal support (11', 11 "), said internal support essentially being suitable to contain said inflatable and retractable part when retracted.

2. System for optimizing the aerodynamics according to claim 1, **characterized in that,** said inflatable and retractable part, when extended, having a pointed end (13); said pointed end (13) terminates with a tip, obtained by folding and heat-sealing the two flaps.

3. System for optimizing the aerodynamics according to claim 1, **characterized in that** the inside of said inflatable and retractable part is provided with sector cross-pieces (20), attached transversely to the inside edges of said inflatable part, suitable to maintain said inflatable part in the desired shape when extended.

4. System for aerodynamic optimization according to claim 1 or 3, **characterized in that** said sector cross-pieces (20) are attached to the inside edges of said inflatable part by means of flaps (21) that are heat-sealed to said inside edges, said sector cross-pieces (20) being stitched to said flaps (21).

5. System for optimizing the aerodynamics according to any claim 1 to 4, **characterized in that** said inflatable and retractable part is made of PVC sheet, the outer surface of which facing the outside of the vehicle is smooth.

## Patentansprüche

1. System zum Optimieren der aerodynamischen Eigenschaften des hinteren Teils eines Industrie- oder Nutz-Fahrzeugs, welches aufblasbare und zurückziehbare Spoiler (1', 1", 2', 2" 3', 3") an der gesamten Fläche des hinteren Profils des Körpers des Fahrzeugs oder des Anhängers oder Aufliegers umfasst, wobei die Spoiler umfassen:
obere Spoiler (1', 1"), seitliche Spoiler (2', 2"), untere Spoiler (3', 3"), die entlang der Linien (6, 7) zweigeteilt sind, die die Flügel (4, 5) der hinteren Türen teilen, die Zugang zum Inneren des Körpers des Fahrzeugs oder des Anhängers oder Aufliegers gewähren, so dass sie es ermöglichen, dass die Türen getrennt geöffnet werden; wobei das System **dadurch gekennzeichnet ist, dass** die aufblasbaren Spoiler (10) weiter umfassen: einen starren inneren Träger (11', 11"), der an den Flügeln (4, 5) befestigt ist, einen aufblasbaren und zurückziehbaren Teil (13, 20, 21), der an dem inneren Träger (11', 11") fixiert ist, wobei der innere Träger im Wesentlichen geeignet ist, den aufblasbaren und zurückziehbaren Teil zu enthalten, wenn dieser zurückgezogen ist.

2. System zum Optimieren der aerodynamischen Eigenschaften gemäß Anspruch 1, **dadurch gekennzeichnet, dass** der aufblasbare und zurückziehbare Teil dann, wenn er ausgefahren ist, ein spitz zulaufendes Ende (13) aufweist, wobei das spitz zulaufende Ende (13) mit einer Spitze endet, die erhalten wird durch Falten und Heißverkleben der beiden Flügel.

3. System zum Optimieren der aerodynamischen Eigenschaften gemäß Anspruch 1, **dadurch gekennzeichnet, dass** das Innere des aufblasbaren und zurückziehbaren Teils versehen ist mit Sektor-Querstücken (20), die quer an den Innenkanten des aufblasbaren Teils befestigt sind und geeignet sind, den aufblasbaren Teil in der gewünschten Form zu halten, wenn er ausgefahren ist.

4. System zum aerodynamischen Optimieren gemäß Anspruch 1 oder 3, **dadurch gekennzeichnet, dass** die Sektor-Querstücke (20) an den Innenkanten des aufblasbaren Teils mittels Flügeln (21) befestigt sind, die an den Innenkanten heißverklebt sind, wobei die Sektor-Querstücke (20) an den Flügeln (21) festgeheftet sind.

5. System zum Optimieren der aerodynamischen Eigenschaften gemäß irgendeinem der Patentansprüche 1 bis 4, **dadurch gekennzeichnet, dass** der aufblasbare und zurückziehbare Teil aus einer PVC-Folie hergestellt ist, dessen äußere Fläche, die zur Außenseite des Fahrzeugs zeigt, glatt ist.

## Revendications

1. Système pour optimiser l'aérodynamique de la partie arrière d'un véhicule industriel ou commercial, qui comprend des becquets gonflables et rétractables (1', 1", 2', 2", 3', 3") sur la surface entière du profil arrière de la carrosserie du véhicule ou de la remorque ou semi-remorque ; lesdits becquets comprenant des becquets supérieurs (1', 1"), des becquets latéraux (2', 2"), des becquets inférieurs (3', 3"), qui sont divisés le long des lignes (6, 7) divisant les ailes (4, 5) des portes arrière donnant accès à l'intérieur de la carrosserie du véhicule ou de la remorque ou semi-remorque, afin de permettre aux portes d'être ouvertes séparément ; le système étant **caractérisé en ce que** lesdits becquets gonflables (10) comprennent en outre un support interne rigide (11', 11"), fixé auxdites ailes (4, 5), une partie gonflable et rétractable (13, 20, 21), fixée audit support interne (11', 11"), ledit support interne étant essentiellement approprié pour contenir ladite partie gonflable et rétractable lorsqu'elle est rétractée.

2. Système pour optimiser l'aérodynamique selon la revendication 1, **caractérisé en ce que** ladite partie gonflable et rétractable, lorsqu'elle est étendue, possède une extrémité pointue (13) ; ladite extrémité pointue (13) se termine avec un embout, obtenu en pliant et thermoscellant les deux rabats.

3. Système pour optimiser l'aérodynamique selon la revendication 1, **caractérisé en ce que** l'intérieur de ladite partie gonflable et rétractable est pourvu de traverses de secteur (20), fixées transversalement aux bords intérieurs de ladite partie gonflable, appropriées pour maintenir ladite partie gonflable dans la forme souhaitée lorsqu'elle est étendue.

4. Système optimiser l'aérodynamique selon la revendication 1 ou 3, **caractérisé en ce que** lesdites traverses de secteur (20) sont fixées aux bords intérieurs de ladite partie gonflable au moyen de rabats (21) qui sont thermoscellés auxdits bords intérieurs, lesdites traverses de secteur (20) étant agrafées auxdits rabats (21).

5. Système pour optimiser l'aérodynamique selon une quelconque revendication 1 à 4, **caractérisé en ce que** ladite partie gonflable et rétractable est faite de feuille de PVC, dont la surface extérieure faisant face à l'extérieur du véhicule est lisse.
